## Europäisches Patentamt

## European Patent Office

## Office européen des brevets

(11) Publication number: **0 169 032**
**B1**

## EUROPEAN PATENT SPECIFICATION

(45) Date of publication of patent specification: **05.12.90**

(51) Int. Cl.⁵: **G 11 B 5/48, G 11 B 5/54**

(21) Application number: **85304965.8**

(22) Date of filing: **11.07.85**

(54) Cassette tape recording and reproducing apparatus.

(30) Priority: **19.07.84 JP 109144/84**

(43) Date of publication of application:
**22.01.86 Bulletin 86/04**

(45) Publication of the grant of the patent:
**05.12.90 Bulletin 90/49**

(84) Designated Contracting States:
**AT DE FR GB IT NL**

(56) References cited:
**EP-A-0 129 918**
**DE-A-2 348 493**
**DE-A-2 758 195**
**US-A-4 014 041**

**PATENT ABSTRACTS OF JAPAN, vol. 8, no. 151**
**(P-286)1588r, 13th July 1984; & JP - A - 59 48850**
**(MATSUSHITA 21-93-1984**

(73) Proprietor: **SONY CORPORATION**
**7-35 Kitashinagawa 6-Chome Shinagawa-ku**
**Tokyo 141 (JP)**

(72) Inventor: **Narita, Hisaya**
**Sony Corp. Patents Division 6-7-35**
**Kitashinagawa**
**Shinagawa-ku Tokyo 141 (JP)**

(74) Representative: **Cotter, Ivan John et al**
**D. YOUNG & CO. 10 Staple Inn**
**London WC1V 7RD (GB)**

# Description

This invention relates to cassette tape recording and reproducing apparatus. More particularly, but not exclusively, the invention relates to portable cassette tape recording and reproducing apparatus which is miniaturised and light in weight so that it is easy to carry.

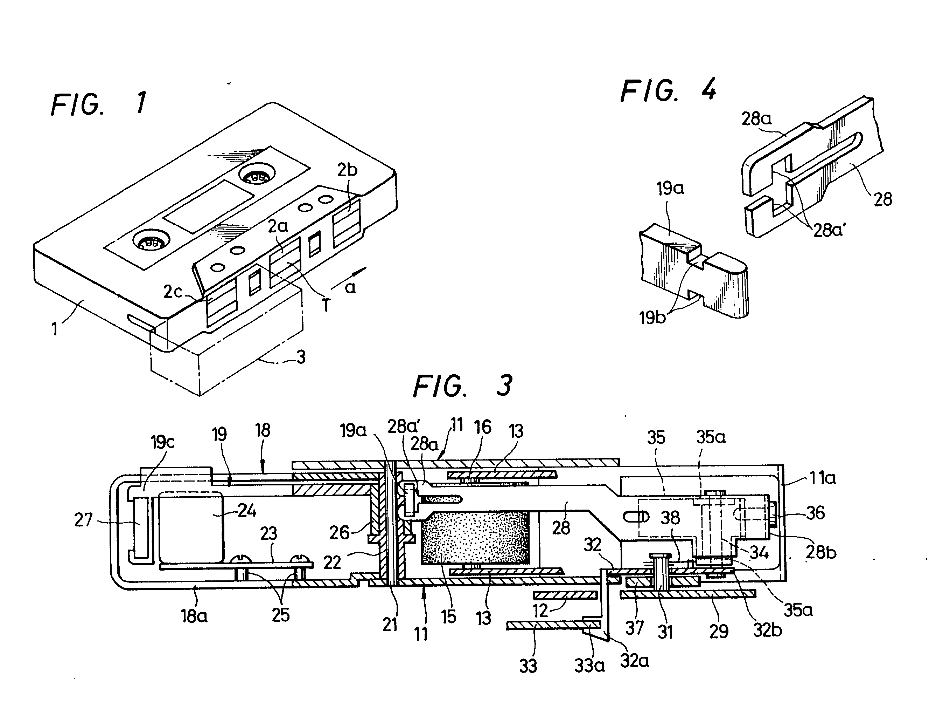

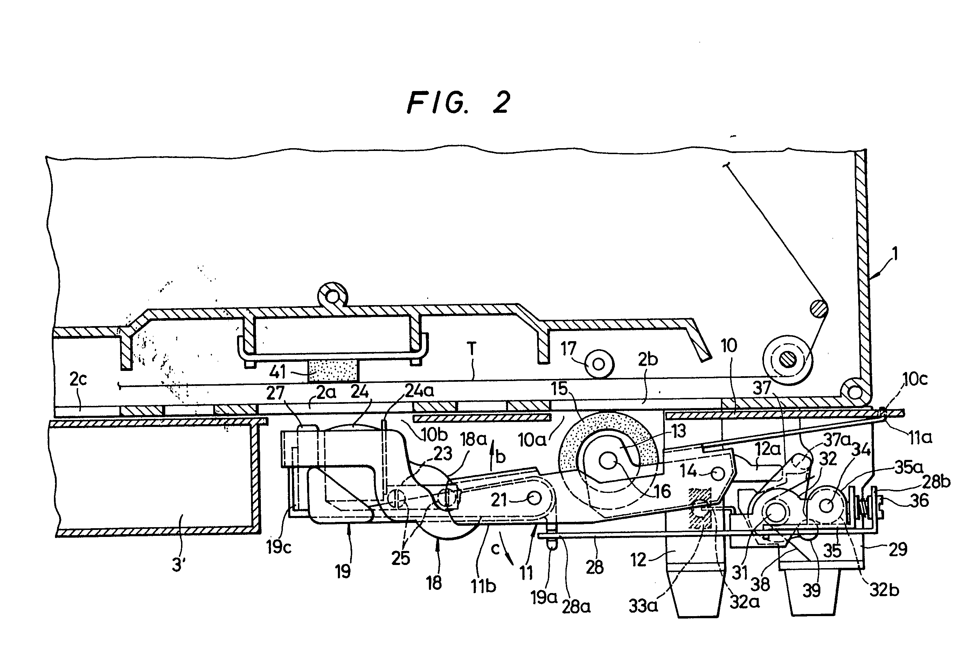

There has been proposed a cassette tape recording and reproducing apparatus which works with a cassette tape contained in a compact tape cassette for recording and reproducing an audio signal, the apparatus having its external dimensions reduced (i.e. miniaturised) to be suitable for use as a portable apparatus. A compact tape cassette used with such a cassette tape recording and reproducing apparatus is formed to have such an appearance as shown in Figure 1 of the accompanying drawings. As shown in Figure 1, the compact tape cassette has a case 1 which is provided on a side wall thereof with plural openings through which a tape T is visible. These openings include three relatively large openings 2a, 2b and 2c, the opening 2a being located between the openings 2b and 2c.

For recording or reproduction of a signal, the compact tape cassette shown in Figure 1 is loaded onto or into the cassette tape recording and reproducing apparatus in such a manner that the tape T is driven to run, for example, in the direction indicated by an arrow a in Figure 1. In a signal recording operation, a recording and reproducing head device, a pinch roller operative to drive the tape T and an erasing head device, each provided in the cassette tape recording and reproducing apparatus, are inserted into the opening 2a at the centre, the opening 2b at the right-hand side and the opening 2c at the left-hand side, respectively. In a signal reproducing operation, on the other hand, although the recording and reproducing head device and the pinch roller are inserted into the opening 2a at the centre and the opening 2b at the right-hand side, respectively, the erasing head device is not inserted into the opening 2c at the left-hand side, so that the opening 2c is not utilised. This means that, in the case where the compact tape cassette as shown in Figure 1 is loaded into or onto a cassette tape player which is constructed as a reproducing apparatus, the opening 2c formed on the case of the compact tape cassette is never utilised.

Accordingly, in connection with a cassette tape player constructed as a reproducing apparatus, it has been proposed to place a certain structural component, such as a battery pack 3 as shown by chain-dotted lines in Figure 1, at a position where the structural component faces the opening 2c of the compact tape cassette loaded into or onto the player, in order to make good use of space within the player and thereby to miniaturise further the external dimensions of the player.

For a miniaturised cassette tape player which is provided with a structural component such as a battery pack positioned to face a specific one of the large openings formed on the case of the compact tape cassette loaded therein or thereon, it is also desired to have an erasing head device, in addition to a recording and reproducing head device, so that the apparatus is capable of being put into a recording operational mode in which it can record a signal on a tape contained in the compact tape cassette. However, in the case of such a miniaturised cassette tape player, there is a difficulty that the erasing head device cannot be provided so as to be inserted into the specific large opening formed in the case of the compact tape cassette loaded into or onto the player because the structural component (such as the battery pack) is positioned so as to face that specific large opening. For this reason, a previously proposed miniaturised cassette tape player which has a structural component (such as the battery pack) positioned so as to face a specific one of plural large openings formed in the case of a compact tape cassette loaded therein or thereon, is not provided with an erasing head and therefore cannot be put into a recording operational mode.

US patent specification US-A-4 014 041 discloses a cassette tape recording and reproducing apparatus similar to the pre-characterizing part of claim 1, while German patent specification DE-A-2 348 493 discloses a cassette tape recording and reproducing apparatus with a movable support for the erase head and a support for the recording and reproducing head which is fixed in an operative position with respect to the tape.

According to the present invention there is provided a cassette tape recording and reproducing apparatus comprising:

recording and reproducing head means for recording a signal on a tape contained in a tape cassette loaded into or onto the apparatus and for reproducing a signal from the tape;

erasing head means for erasing a signal recorded on the tape;

first support means for supporting said recording and reproducing head means;

said first support means being movable and capable of selectively adopting an operative position for causing said recording and reproducing head means to come into contact with the tape contained in the tape cassette through an opening formed in the case of the tape cassette, and an inoperative position for holding said recording and reproducing head means outside the tape cassette;

said first movable support means comprising a main movable arm member supported at one end portion thereof by a stationary portion of a chassis of the apparatus so as to be rotatable;

second support means for supporting said erasing head means; and operational mode selecting means;

characterised by:

said second support means for supporting said erasing head means being movable and capable of selectively adopting a first position for causing said erasing head means to come into contact with the tape contained in the tape cassette through said opening formed in the case of the tape cassette together with said recording and reproducing head means, and a second position for holding said erasing head means outside the tape cassette, while said recording and reproducing head means is in contact with said tape;

said operational mode selecting means comprising first operational mode selecting means for setting a reproducing operational mode by causing said first and second movable support means to take said operative position and said second position, respectively, so that said recording and reproducing head means comes into contact with said tape whereas said erasing head means is held outside the tape cassette, and second operational mode selecting means for setting a recording operational mode by causing said first and second movable support means to take said operative position and said first position, respectively, so that both said recording and reproducing head means and said erasing head means come into contact with said tape;

said first movable support means further comprising a subsidiary movable arm member mounted on said main movable arm member and having said recording and reproducing means mounted thereon;

said second movable support means being mounted to be rotatable on said main movable arm member and having said erasing head means mounted thereon;

and said subsidiary movable arm member and said second movable support means being supported to be rotatable individually about a common shaft provided on said main movable arm member.

Thus, in a cassette tape recording and reproducing apparatus in accordance with the present invention, the recording and reproducing head means supported by the first movable support means and the erasing head means supported by the second movable support means are inserted into the same opening formed in the case of a tape cassette loaded into or onto the apparatus in order to come into contact with the tape contained in the tape cassette when the recording operational mode is selected by operation of the second operational mode selecting means. Therefore, the apparatus is capable of being put selectively and properly into the reproducing operational mode and the recording operational mode without utilising another opening formed in the case of the tape cassette. Thus, the apparatus is capable of having its external dimensions miniaturised by utilising effectively a space which faces the above-mentioned other opening in the cassette, for example in the same manner as in the above-described miniaturised cassette tape player.

The invention will now be further described, by way of illustrative and non-limiting example, with reference to the accompanying drawings, in which:

Figure 1 is a perspective view of the exterior of a compact tape cassette;

Figure 2 is a plan view showing part of a cassette tape recording and reproducing apparatus embodying the present invention, together with a fragmental section of a tape cassette loaded therein or thereon;

Figure 3 is a sectional view of the part of the apparatus shown in Figure 2,

Figure 4 is an exploded perspective view used for explaining the structure of a portion of the part of the apparatus shown in Figure 2; and

Figures 5 and 6 are illustrations used for explaining the operation of the part of the apparatus shown in Figure 2.

A cassette tape recording and reproducing apparatus embodying the present invention will now be described in detail with reference to the accompanying drawings.

Figures 2 and 3 show part of the cassette tape recording and reproducing apparatus embodying the present invention. In Figure 2, the part of the apparatus is shown together with a part of a compact tape cassette such as that shown in Figure 1, which cassette is loaded into or onto the apparatus.

A chassis of the apparatus includes a wall-shaped portion 10 which faces a side wall of a case 1 of the compact tape cassette in which plural openings, including three relatively large openings 2a, 2b and 2c, are formed. The compact tape cassette contains a tape T. On the wall-shaped portion 10 of the chassis, a main movable arm member 11 is supported at one end portion 11a thereof so as to be rotatable in the directions indicated by arrows b and c in Figure 2. More specifically, an engaging projection provided at the one end portion 11a of the main movable arm member 11 is inserted into a slit 10c in the wall-shaped portion 10 of the chassis so that the main movable arm member 11 can be swung about a fulcrum at the position of the slit 10c. The main movable arm member 11 is so arranged that the rotation thereof is caused in response to movement of a playing operational mode selector 12 which can be pushed inwardly towards the wall-shaped portion 10 of the chassis.

A roller arm member 13 is rotatably supported by a shaft 14 at a central portion of the main movable arm member 11 and a pinch roller 15 is mounted so as to be free to rotate by means of an axle 16 supported by an end portion of the roller arm member 13. The roller arm member 13 is biassed by a spring member (not shown) so that it tends to rotate around the shaft 14 in the clockwise direction as viewed in Figure 2, and is restrained from rotating by a limiting member (not shown) so that it adopts usually a stationary position as shown in Figure 2. The pinch roller 15 is inserted into the opening 2b formed in the case 1 of the compact tape cassette through a cutout 10a provided in the wall-shaped portion 10 of the chassis to come into contact with a tape T contained in the case 1 of the compact tape cassette when the main movable arm member 11 is rotated in the direction of the arrow b. In this event, the tape T is pinched between the pinch roller 15 and a capstan 17, which is inserted into the case 1 of the compact tape cassette and rotated to drive the tape, and is driven to run along a path indicated by a heavy solid line in Figure 2.

A pair of subsidiary movable arm members 18 and 19 are mounted by a shaft 21 on the other end portion 11b of the main movable arm member 11 so as to be rotatable individually. The subsidiary movable arm member 18 is formed to be ]-shaped in its entirety, as shown in Figure 3, and supported through a bearing member 22 by the shaft 21. A head supporting plate 23 is attached to a lower plate portion 18a of the subsidiary movable arm member 18 by a pair of adjustable screws 25, and a recording and reproducing head device 24, which is accompanied by a tape guide member 24a and is used for recording a signal on a tape and reproducing a signal from a tape, is mounted on the head supporting plate 23. The gap azimuth of the recording and reproducing head device 24 can be adjusted by turning the adjustable screws 25. By virtue of the construction described above, the main movable arm member 11 and the subsidiary movable arm member 18 act in a body as a movable support member for supporting and moving the recording and reproducing head device 24.

The subsidiary movable arm member 18 is biassed by a spring member (not shown) so as to tend to rotate around the shaft 21 in a clockwise direction as viewed in Figure 2, and is restrained from rotating by a limiting member (not shown) so that it adopts usually a stationary position as shown in Figure 3 so as to move together with the main movable arm member 11. The recording and reproducing head device 24 is inserted into the opening 2a formed in the case 1 of the compact tape cassette through a cutout 10b provided in the wall-shaped portion 10 of the chassis to come into contact with the tape T contained in the case 1 of the compact tape cassette, together with the tape guide member 24a, when the subsidiary movable arm member 18 is moved in accordance with the rotation of the main movable arm member 11 in the direction indicated by the arrow b in Figure 2.

The subsidiary movable arm member 19 is supported at one end portion thereof, through a bearing member 26, by the shaft 21. An erasing head device 27 is attached to the other end portion 19c of the subsidiary movable arm member 19. The erasing head device 27 is, for example, a permanent magnet of relatively small size and is used for erasing a signal recorded on the tape. Thus, the subsidiary movable arm member 19 acts as a movable support member for supporting and moving the erasing head device 27.

The subsidiary movable arm member 19 is linked by a linking plate member 28 with a recording operational mode selector 29, which can be pushed inwardly towards the wall-shaped portion 10 of the chassis. In more detail, as shown in Figure 3, a pin 31 is mounted on the recording operational mode selector 29 and a connecting arm member 32 is pivoted on the pin 31 to connect the linking plate member 28 with the recording operational mode selector 29. One end portion 32a of the connecting arm member 32 is engaged to be rotatable with an engaging portion 33a provided on a floor portion 33 of the chassis, and a pillar 34 is mounted on the other end portion 32b of the connecting arm member 32. A pair of engaging portions 35a projecting parallel to each other from a subsidiary linking plate member 35 which engages with the linking plate member 28, are supported by the pillar 34 so as to be rotatable.

With this arrangement, when the connecting arm member 32 is rotated around the pin 31 mounted on the recording operational mode selector 29, the linking plate member 28 is moved in accordance with the rotation of the connecting arm member 32. One end portion 28a of the linking plate member 28 engages with an engaging projection 19a provided at one end portion of the subsidiary movable arm member 19. To provide this engagement, as shown in exploded manner in Figure 4, a pair of cutouts 19b and another pair of cutouts 28a' are provided at the engaging projection 19a and at the one end portion 28a of the linking plate member 28' respectively, and each of the cutouts 28a, engages with a corresponding one of the cutouts 19b, so that the subsidiary movable arm member 19 is linked with the linking plate member 28.

In the configuration described above, the subsidiary movable arm member 19 usually adopts a position as shown in Figure 2, in which it is not rotated in relation to the subsidiary movable arm member 18, so that the erasing head device 27 is positioned to be close to the recording and reproducing head device 24. When the engaging projection 19a provided on one end portion of the subsidiary movable arm member 19 is moved to rotate around the shaft 21 in the anticlockwise direction as viewed in Figure 2 by one end portion 28a of the linking plate member 28, the subsidiary movable arm member 19 is rotated around the shaft 21 in the anticlockwise direction as viewed in Figure 2 in relation to the subsidiary movable arm member 18, so that the erasing head device 27 is moved to travel away from the recording and reproducing head device 24.

Then, when the main movable arm member 11 is rotated in the direction indicated by the arrow b in Figure 2 and, at that time, the subsidiary movable arm member 19 is not rotated in relation to the subsidiary movable arm member 18 so as to keep the erasing head device 27 close to the recording and reproducing head device 24, the erasing head device 27 is inserted into the opening 2a formed in the case 1 of the compact tape cassette through the cutout 10b provided in the wall-shaped portion 10 of the chassis, together with the recording and reproducing head device 24, to come into contact with the tape T in the case 1 of the compact tape cassette. Further, when the main movable arm member 11 is rotated in the direction indicated by the arrow b in Figure 2 and, at that time, the subsidiary movable arm member 19 is rotated around the shaft 21 in the anticlockwise direction as viewed in Figure 2 in relation to the subsidiary movable arm member 18 so as to cause the erasing head device 27 to be positioned apart from the recording and reproducing head device 24, the recording and reproducing head device 24 is inserted into the opening 2a formed in the case 1 of the compact tape cassette, but the erasing head device 27 is not inserted into the opening 2a.

An adjustable screw 36 engaging with the subsidiary linking plate member 35 is mounted at the other end portion 28b of the linking plate member 28. The adjustable screw 36 is provided for adjusting the position of the subsidiary movable arm member 19 in relation to the main movable arm member 11 so that the condition of contact between the erasing head device 27 and the tape T in the case 1 of the compact tape cassette can be controlled. When the adjustable screw 36 is screwed in, the linking plate member 28 is moved along the subsidiary linking plate member 35 to the left as viewed in Figure 2 to rotate the subsidiary movable arm member 19 slightly around the shaft 21 in the clockwise direction as viewed in Figure 2, so that the erasing head device 27 is slightly advanced to be close to the tape T. In contrast, when the adjustable screw 36 is loosened, the erasing head device 27 is moved back slightly to be apart from the tape T.

A locking plate member 37 is mounted to be rotatable through the pin 31 on the recording operational mode selector 29. The locking plate member 37 is biassed by a spring member 38 so as to tend to rotate in the anticlockwise direction as viewed in Figure 2, but is held usually at such a position as shown in Figure 2 by a pin 39 provided thereon for engaging with the connecting arm member 32. The locking plate member 37 has a locking boss 37a projecting downwardly therefrom. When the recording operational mode selector 29 is pushed in and the locking plate member 37 thereby is rotated around the pin 31 in the anticlockwise direction as viewed in Figure 2, the locking boss 37a engages with a projection 12a extending from the playing operational mode selector 12 which is maintained in the pushed-in position, so that the recording operational mode selector 29 is locked to be kept in the pushed-in position. In such case, the playing operational mode selector 12 is locked to be kept in the pushed-in position by a known mechanism which is not shown.

As described above, both the recording and reproducing head device 24 and the erasing head device 27 are inserted in common into the opening 2a formed in the case 1 of the compact tape cassette whereupon they come into contact with the tape T contained in the compact tape cassette, and the opening 2c also formed in the case 1 of the compact tape cassette is not utilised.

Accordingly, in this embodiment, a battery container 3' is positioned in a space facing the opening 2c so as to make good use of space.

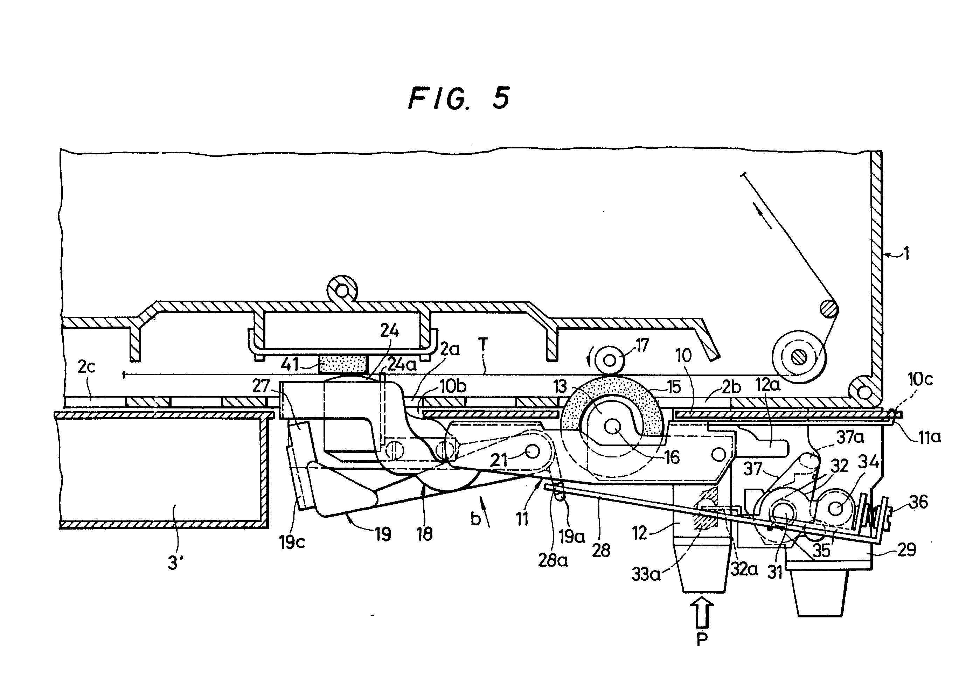

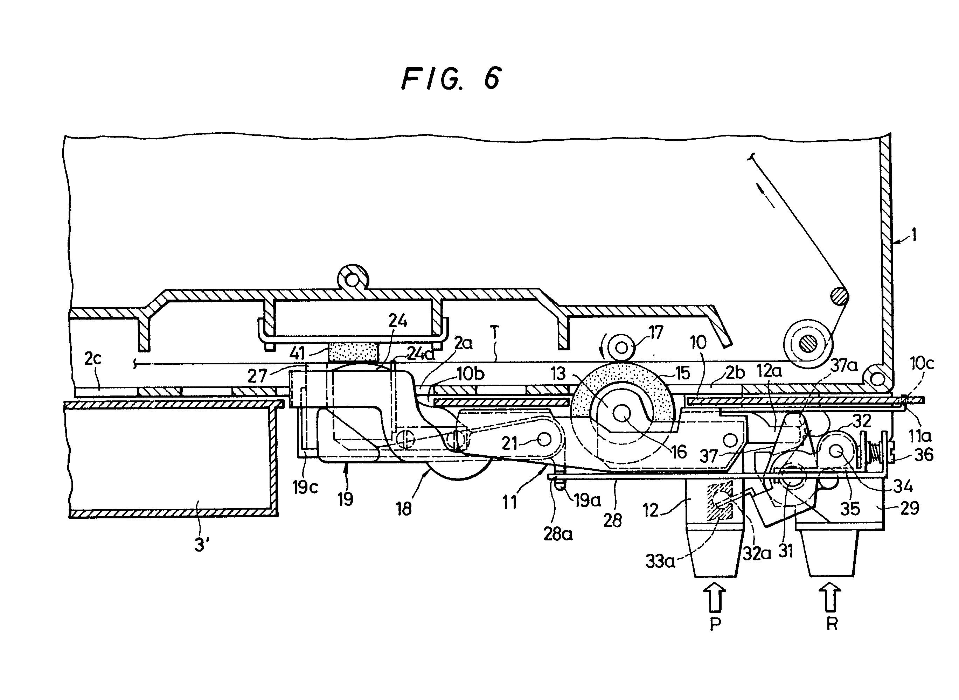

The operation of the above-described embodiment will now be explained with reference to Figures 5 and 6.

When a reproducing operational mode for reproducing a signal recorded on the tape T contained in the case 1 of the compact tape cassette is to be selected, the playing operational mode selector 12 is pushed in (as indicated by an arrow P in Figure 5) so as to move from the position shown in Figure 2 into the pushed-in position shown in Figure 5, and is locked to be kept in the pushed-in position. In accordance with the movement of the playing operational mode selector 12 as it is pushed in, the main movable arm member 11 and the subsidiary movable arm member 18 are rotated in a body in the direction of the arrow b about the fulcrum at the position of the slit 10c in which the one end portion 11a of the main movable arm member 11 is inserted. With this rotation, the subsidiary movable arm member 18 is moved to approach the case 1 of the compact tape cassette, and the recording and reproducing head device 24 is inserted into the opening 2a formed in the case 1 of the compact tape cassette through the cutout 10b provided in the wall-shaped portion 10 of the chassis to come into contact with the tape T contained in the case 1 of the compact tape cassette. The tape T is positioned between the recording and reproducing head device 24 and a pressure pad 41 provided in the case 1 for supporting the tape T. The subsidiary movable arm member 18 is finally bent slightly, against the spring member which is biasing the subsidiary movable arm member 18 as mentioned above, at the position of the shaft 21 in relation to the main movable arm member 11, as shown in Figure 5, so that a contacting surface of the recording and reproducing head device 24 is in proper contact with the tape T. Further, at this time, the pinch roller 15 is inserted into the opening 2b formed in the case 1 of the compact tape cassette and the tape T is pinched between the pinch roller 15 and the capstan 17 to be driven to run by the capstan 17.

In this situation, since the recording operational mode selector 29 is not pushed in, the engaging projection 19a which is provided on one end portion of the subsidiary movable arm member 19 is moved to rotate around the shaft 21 in the anticlockwise direction as viewed in Figure 5 by one end portion 28a of the linking plate member 28, and the subsidiary movable arm member 19 by which the erasing head device 27 is supported therefore is rotated around the shaft 21 in the anticlockwise direction as viewed in Figure 5 in relation to the subsidiary movable arm member 18. Accordingly, the erasing head device 27 is moved to travel away from the recording and reproducing head device 24 and is not inserted into the opening 2a formed in the case 1 of the compact tape cassette.

Referring now to Figure 6, when a recording operational mode for recording a signal on the tape T contained in the case 1 of the compact tape cassette is to be selected, the playing operational mode selector 12 is pushed in as indicated by an arrow P and locked to be kept in the pushed-in position, and the recording operational mode selector 29 is also pushed in as indicated by an arrow R. In this case, since the playing operational mode selector 12 is kept in the pushed-in position, both the main movable arm member 11 and the subsidiary movable arm member 18 are rotated so that the subsidiary movable arm member 18 is moved to approach the case 1 of the compact tape cassette, and the recording and reproducing head device 24 is inserted into the opening 2a formed in the case 1 of the compact tape cassette to come into contact with the tape T contained in the case 1 of the compact tape cassette. Further, the pinch roller 15 is inserted into the opening 2b formed inthe case 1 of the compact tape cassette and the tape T is pinched between the pinch roller 15 and the capstan 17 to be driven to run by the capstan 17. In addition, since the recording operational mode selector 29 is pushed in as shown by the arrow R in Figure 6, the linking plate member 28 is shifted in its entirety towards the case 1 of the compact tape cassette without being rotated and, by virtue of this, the engaging projection 19a provided on one end portion of the subsidiary movable arm member 19 is not rotated around the shaft 21 on the main movable arm member 11.

Accordingly, the subsidiary movable arm member 19 is not rotated around the shaft 21 in relation to the subsidiary movable arm member 18, but is moved to approach the case 1 of the compact tape cassette together with the subsidiary movable arm member 18. As a result of this, the erasing head device 27 is kept in the position close to the recording and reproducing head device 24 and is inserted into the opening 2a formed in the case 1 of the compact tape cassette through the cutout 10b provided in the wall shaped portion 10 of the chassis, together with the recording and reproducing head device 24, to come into contact with the tape T in the case 1 of the compact tape cassette.

Further, in this case, the locking plate member 37 is rotated around the pin 31 in the anticlockwise direction as viewed in Figure 6 and the locking boss 37a projecting from the locking plate member 37 engages with the projection 12a extending from the playing operational mode selector 12 kept in the pushed-in position. Consequently, the recording operational mode selector 29 is locked to be kept in the pushed-in position and a recording operation is performed.

After the recording operation is completed, both the playing operational mode selector 12 and the recording operational mode selector 29 are released from their respective pushed-in positions and are moved back to the positions shown in Figure 2, respectively, by a releasing mechanism (not shown).

**Claims**

1. A cassette tape recording and reproducing apparatus comprising:

recording and reproducing head means (24) for recording a signal on a tape (T) contained in a tape cassette loaded into or onto the apparatus and for reproducing a signal from the tape (T);

erasing head means (27) for erasing a signal recorded on the tape (T);

first support means (11, 18) for supporting said recording and reproducing head means (24);

said first support means (11, 18) being movable and capable of selectively adopting an operative position for causing said recording and reproducing head means (24) to come into contact with the tape (T) contained in the tape cassette through an opening (20) formed in the case (1) of the tape cassette, and an inoperative position for holding said recording and reproducing head means (24) outside the tape cassette;

said first movable support means (11, 18) comprising a main movable arm member (11) supported at one end portion thereof by a stationary portion (10) of a chassis of the apparatus so as to be rotatable;

second support means (19) for supporting said erasing head means (27); and

operational mode selecting means (12, 29);

characterised by:

said second support means (19) for supporting said erasing head means (27) being movable and capable of selectively adopting a first position for causing said erasing head means (27) to come into contact with the tape (T) contained in the tape cassette through said opening (20) formed in the case (1) of the tape cassette together with said recording and reproducing head means (24), and a second position for holding said erasing head means (27) outside the tape cassette, while said recording and reproducing head means (24) is in contact with said tape (T);

said operational mode selecting means (12, 29) comprising first operational mode selecting means (12) for setting a reproducing operational mode by causing said first and second movable support means (11, 18, 19) to take said operative position and said second position, respectively, so that said recording and reproducing head means (24) comes into contact with said tape (T) whereas said erasing head means is held outside the tape cassette, and second operational mode selecting means (29) for setting a recording operational mode by causing said first and second movable support means (11, 18, 19) to take said operative position and said first position, respectively, so that both said recording and reproducing head means (24) and said erasing head means (27) come into contact with said tape (T);

said first movable support means (11, 18) further comprising a subsidiary movable arm member (18) mounted on said main movable arm member (11) and having said recording and reproducing means (24) mounted thereon; said second movable support means (19) being mounted to be rotatable on said main movable arm member (11) and having said erasing head means (27) mounted thereon; and

said subsidiary movable arm member (18) and said second movable support means (19) being supported to be rotatable individually about a common shaft (21) provided on said main movable arm member (11).

2. Apparatus according to claim 1 wherein said first operational mode selecting means (12) comprises a playing operational mode selector (12) operative to take a shifted position for shifting said main and subsidiary movable arm members (11, 18) together to a position close to the tape cassette and keeping them in said position close to the tape cassette; and

wherein said second operational mode selecting means (29) comprises a recording operational mode selector (29) operative to move independently of said playing operational mode selector (12);

and comprising.

linking means (28) for linking said second movable support means (19) with said recording operational mode selector (29) in order to control the position of said second movable support means (19) in relation to said main movable arm member (11) in response to the movement of said recording operational mode selector (29), said linking means (28) shifting said second movable support means (19) to a position close to the tape cassette when said recording operational mode selector (29) takes a shifted position.

3. Apparatus according to claim 2 wherein said linking means (28) comprises an elongate linking member (28), first connecting means (19a) for connecting one end portion of said elongate linking member (28) with said second movable support means (19), and second connecting means (32, 35, 36) for connecting the other end portion of said elongate linking member (28) with said recording operational mode selector (29).

4. Apparatus according to claim 3 wherein said first connecting means (19a) comprises an engaging portion (19a) provided on said second movable support means (19) for engaging movably with the one end portion of said elongate linking member (28).

5. Apparatus according to claim 4 wherein said second connecting means (32, 35, 36) comprises a connecting arm member (32) pivoted on said recording operational mode selector (29) for connecting the other end portion of said elongate linking member (28) to be rotatable with said recording operational mode selector (29).

6. Apparatus according to claim 5 wherein said second connecting means (32, 35, 36) comprises adjusting means (35, 36) for adjusting, through said elongate linking member (28), the position of said second movable support means (19) in relation to said main movable arm member (11) so that the condition of contact between said erasing head means (27) and the tape (T) contained in the tape cassette can be controlled.

7. Apparatus according to any one of claims 2 to 6 wherein said recording operational mode selector (29) is provided with locking means (37) for engaging with said playing operational mode selector (12) kept in said shifted position so as to maintain said recording operational mode selector (29) in said shifted position.

**Patentansprüche**

1. Bandkassetten-Aufnahme- und -Wiedergabegerät mit einer Aufnahme- und Wiedergabe-Kopfanordnung (24) zur Aufnahme eines Signals auf einem Band (T), das sich einer in das Gerät eingesetzten oder auf das Gerät aufgesetzten Bandkassette befindet, sowie zur Wiedergabe eines Signals von dem Band (T)

mit einer Lösch-Kopfanordnung (27) zum Löschen eines auf dem Band (T) aufgezeichneten Signals,

mit einem ersten Trägerteil (11, 18) zur Halterung der Aufnahme- und Wiedergabe-Kopfanordnung (24), das (11, 18) beweglich angeordnet ist und wahlweise eine Arbeitsposition einnehmen kann, in der es bewirkt, daß die Aufnahme- und Wiedergabe-Kopfanordnung (24) durch eine in dem Gehäuse (1) der Bandkassette angeordneten Öffnung mit dem in der Bandkassette enthaltenen Band in Kontakt kommt, oder eine Ruheposition, in der es die Aufnahme- und Wiedergabe-Kopfanordnung (24) außerhalb der Bandkassette hält,

wobei das erste Trägerteil (11, 18) einen beweglichen Hauptarm (11) aufweist, der in einem seiner Endbereiche an einem stationären Teil (10) eines Gerätechassis drehbar gelagert ist,

ferner mit einem zweiten Trägerteil (19) zur Halterung der Lösch-Kopfanordnung (27),

sowie mit einer Betriebsart-Wähleinrichtung (12, 29),

dadurch gekennzeichnet,

daß das zweite Trägerteil (19) zum Halterung der Lösch-Kopfanordnung (27) bewegbar angeordnet ist und wahlweise eine erste Position einnehmen kann, in der es bewirkt, daß die Lösch-Kopfanordnung (27) zusammen mit der Aufnahmeund Wiedergabe-Kopfanordnung (24) durch die in dem Gehäuse (1) der Bandkassette angebrachte Öffnung (20) mit dem Band (T) in Kontakt kommt, und einer zweiten Position, in der es die Lösch-Kopfanordnung (27) außerhalb der Bandkassette hält, während die Aufnahme- und Wiedergabe-Kopfanordnung (24) Kontakt mit Band (T) hat,

daß die Betriebsart-Wähleinrichtung (12, 29) erste Betriebsart-Wählmittel (12) sowie zweite Betriebsart-Wählmittel (29) aufweist, wobei die ersten Betriebsart-Wählmittel (12) die Einstellung auf eine Wiedergabe-Betriebsart herbeiführen, indem sie das erste und das zweite bewegliche Trägerteil (11, 18, 19) in die Arbeitsposition bzw. die zweite Position führen, so daß die Aufnahme- und Wiedergabe-Kopfanordnung (24) mit dem Band (T) in Kontakt kommt, während die Lösch-Kopfanordnung (27) außerhalb der Bandkassette gehalten wird, und wobei die zweiten Betriebsart-Wählmittel (29) die Einstellung auf eine Aufnahme-Betriebsart herbeiführen, indem sie das erste und das zweite bewegliche Trägerteil (11, 18, 19) in die Arbeitsposition bzw. in die erste Position führen, so daß die Aufnahme- und Wiedergabe-Kopfanordnung (24) und die Lösch-Kopfanordnung (27) mit dem Band (T) in Kontakt kommen,

daß das erste bewegliche Trägerteil (11, 18) ferner einen beweglichen Hilfsarm (18) aufweist, der an dem beweglichen Hauptarm (11) montiert ist und an dem die Aufnahme- und Wiedergabe-Kopfanordnung (24) montiert ist,

daß das zweite bewegliche Trägerteil (19) an dem beweglichen Hauptarm (11) drehbar montiert ist und an ihm die Lösch-Kopfanordnung (27) montiert ist,

und daß der bewegliche Hilfsarm (18) und das zweite bewegliche Trägerteil (19) so gelagert sind, daß sie individuell um eine an dem beweglichen Hauptarmteil (11) angeordnete gemeinsame Welle (21) drehbar sind.

2. Gerät nach Anspruch 1,
bei dem die ersten Betriebsart-Wählmittel (12) einen Wiedergabe-Betriebsartwähler (12) umfassen, der eine verschobene Position einnehmen kann, um den beweglichen Hauptarm 11) und den beweglichen Hilfsarm (18) zusammen in eine Position in der Nähe der Bandkassette zu verschieben und in dieser Position zu halten,

bei dem die zweiten Betriebsart-Wählmittel (29) einen Aufnahme-Betriebsartwähler (49) umfassen, der unabhängig von dem Wiedergabe-Betriebsartwähler (12) bewegbar ist,

und bei dem Kupplungsmittel (28) vorgesehen sind, die das zweite beweglichen Trägerteil (19) mit dem Aufnahme-Betriebsartwähler (29) verbinden, um in Abhängigkeit von der Bewegung des Aufnahme-Betriebsartwählers (29) die Position des zweiten beweglichen Trägerteils (19) relativ zu dem beweglichen Hauptarm (11) zu steuern, und die (28) das zweite bewegliche Trägerteil (19) in eine Position in der Nähe der Bandkassette verschieben, wenn der Aufnahme-Betriebsartwähler (29) seine verschobene Position einnimmt.

3. Gerät nach Anspruch 2, bei dem die Kupplungsmittel (29) ein langgestrecktes Kupplungsglied (28) umfassen, ferner erste Verbindungsmittel (19a) zum Verbinden eines dieses langgestreckten Kupplungsglieds (28) mit dem zweiten beweglichen Trägerteil (19) sowie zweite Verbindungsmittel (32, 35, 36) zum Verbinden des anderen Endbereichs des langgestreckten Kupplungsglieds (28) mit dem Aufnahme-Betriebsartwähler (29).

4. Gerät nach Anspruch 3, bei dem die ersten Verbindungssmittel (19a) ein an dem zweiten beweglichen Trägerteil (19) angeordnetes Mitnehmerteil (19a) aufweisen, über das sie mit dem einen Endbereich des langgestreckten Kupplungsglieds (28) in beweglichem Eingriff stehen.

5. Gerät nach Anspruch 4, bei dem die zweiten Verbindungsmittel (32, 35, 36) einen Verbindungsarm (32) aufweisen, der gelenkig mit dem Aufnahme-Betriebsartwähler (29) verbunden ist, um den anderen Endbereich des langgestreckten Kupplungsglieds (28) in der Weise zu verbinden, daß dieses mit dem Aufnahme-Betriebsartwähler (29) drehbar ist.

6. Gerät nach Anspruch 5, bei dem die zweiten Verbindungsmittel (32, 35, 36) Justiermittel (35, 36) aufweisen, mittels derer die Position des zweiten beweglichen Trägerteils (19) relativ zu dem beweglichen Hauptarm (11) über das langgestreckte Kupplungsglied (28) so justierbar ist, daß der Berührungszustand zwischen der Lösch-Kopfanordnung (27) und dem Band (T) in der Bandkassette einstellbar ist.

7. Gerät nach einem der Ansprüche 2 bis 6, bei dem der Aufnahme- Betriebsartwähler (29) mit einer Blockiereinrichtung (37) ausgestattet ist, die mit dem in der verschobenen Position gehaltenen Wiedergabe-Betriebsartwähler (12) so in Eingriff bringbar ist, daß der Aufnahme-Betriebsartwähler (29) in der verschobenen Position gehalten wird.

**Revendications**

1. Appareil d'enregistrement et de lecture sur bande magnétique en cassette, comprenant:
une tête d'enregistrement et de lecture (24) destinée à enregistrer un signal sur une bande magnétique (T) logée dans une cassette de bande magnétique chargée sur l'appareil ou dans l'appareil, et à lire un signal sur la bande magnétique (T),

une tête (27) d'effacement d'un signal enregistré sur la bande magnétique (T),

un premier dispositif (11, 18) de support de la tête d'enregistrement et de lecture (24), le premier dispositif de support (11, 18) étant mobile et pouvant prendre sélectivement une position de travail dans laquelle la tête d'enregistrement et de lecture (24) est au contact de la bande magnétique (T) logée dans la cassette par l'intermédiaire d'une ouverture (20) formée dans le boîtier (1) de la cassette, et une position de repos dans laquelle la tête d'enregistrement et de lecture (24) est à l'extérieur de la cassette de bande,

le premier dispositif mobile de support (11, 18) comprenant un bras principal mobile (11) supporté, à une première partie d'extrémité, par une partie fixe (10) d'un châssis de l'appareil afin qu'il puisse tourner,

un second dispositif (19) de support de la tête d'effacement (27), et

un dispositif (12, 29) de sélection de mode de fonctionnement,
caractérisé en ce que:
le second dispositif (19) de support de la tête d'effacement (27) est mobile et peut prendre sélectivement une première position dans laquelle la tête d'effacement (27) est au contact de la bande magnétique (T) logée dans la cassette de bande par passage par l'ouverture (20) formée dans le boîtier (1) de la cassette avec la tête d'enregistrement et de lecture (24), et une seconde position de maintien de la tête d'effacement (27) en dehors de la cassette, alors que la tête d'enregistrement et de lecture (24) est au contact de la bande magnétique (T),

le dispositif (12, 29) de sélection de mode de fonctionnement comprend un premier dispositif (12) de sélection de mode de fonctionnement destiné à régler un mode de lecture en mettant le premier et le second dispositif mobile de support (11, 18, 19) dans la position de travail et dans la seconde position respectivement, si bien que la tête d'enregistrement et de lecture (24) est au contact de la bande magnétique (T) alors que la tête d'effacement est en dehors de la cassette, et un second dispositif (29) de sélection de mode de fonctionnement destiné à régler un mode d'enregistrement dans lequel le premier et le second dispositif mobile de support (11, 18, 19) sont dans la position de travail et dans la première position respectivement, si bien que la tête d'enregistrement et de lecture (24) et la tête d'effacement (27) sont toutes deux au contact de la bande magnétique (T),

le premier dispositif mobile de support (11, 18) comporte en outre un bras auxiliaire mobile (18) monté sur le bras principal mobile (11) et sur lequel est montée la tête d'enregistrement et de lecture (24),

le second dispositif mobile de support (19) est monté afin qu'il puisse tourner sur le bras principal mobile (11) et porte la tête d'effacement (27), et

le bras auxiliaire mobile (18) et le second dispositif mobile de support (19) sont supportés afin qu'ils puissent tourner individuellement autour d'un axe commun (21) placé sur le bras principal mobile (11).

2. Appareil selon la revendication 1, dans lequel le premier dispositif (12) de sélection d'un mode de fonctionnement est un sélecteur de mode de lecture (12) destiné à prendre une position décalée dans laquelle il déplace ensemble le bras principal et le bras auxiliaire mobile (11, 18) vers une position proche de la cassette et les maintient dans cette position proche de la cassette, et

dans lequel le second dispositif (29) de sélection d'un mode de fonctionnement comprend un sélecteur (29) de mode d'enregistrement destiné à se déplacer indépendamment du sélecteur (12) de mode de lecture, et

l'appareil comprenant un dispositif (28) de liaison destiné à relier le second dispositif mobile de support (19) au sélecteur de mode d'enregistrement (29) afin qu'il règle la position du second dispositif mobile de support (19) par rapport au bras principal mobile (11) à la suite du déplacement du sélecteur de mode d'enregistrement (29), le dispositif de liaison (28) déplaçant le second dispositif mobile de support (19) vers une position proche de la cassette de bande lorsque le sélecteur de mode d'enregistrement (29) prend une position décalée.

3. Appareil selon la revendication 2, dans lequel le dispositif de liaison (28) comporte un organe allongé de liaison (28), un premier dispositif (19a) de raccordement d'une première partie d'extrémité de l'organe allongé de liaison (28) au second dispositif mobile de support (19), et un second dispositif (32, 35, 38) de raccordement de l'autre partie d'extrémité de l'organe allongé de liaison (28) au sélecteur du mode d'enregistrement (29).

4. Appareil selon la revendication 3, dans lequel le premier dispositif de raccordement (19a) comporte une partie de coopération (19a) formée sur le second dispositif mobile de support (19) et destinée à coopérer avec la première partie d'extrémité de l'organe allongé de liaison (28) tout en pouvant se déplacer par rapport à cette partie d'extrémité.

5. Appareil selon la revendication 4, dans lequel le second dispositif de raccordement (32, 35, 36) comporte un bras de raccordement (32) articulé sur le sélecteur du mode d'enregistrement (29) afin qu'il raccorde l'autre partie d'extrémité de l'organe allongé de liaison (28) afin qu'elle puisse tourner avec le sélecteur du mode d'enregistrement (29).

6. Appareil selon la revendication 5, dans lequel le second dispositif de raccordement (32, 35, 36) comporte un dispositif (35, 36) de réglage, par l'intermédiaire de l'organe allongé de liaison (28), de la position du second dispositif mobile de support (19) par rapport au bras principal mobile (11) de manière que l'état de contact de la tête d'effacement (27) et de la bande magnétique (T) logée dans la cassette de bande puisse être réglé.

7. Appareil selon l'une quelconque des revendications 2 à 6, dans lequel le sélecteur de mode d'enregistrement (29) est muni d'un dispositif de blocage (37) destiné à coopérer avec le sélecteur de mode de lecture (12) maintenu en position décalée de manière que le sélecteur de mode d'enregistrement (29) soit maintenu dans la position décalée.

FIG. 1

FIG. 4

FIG. 3

1

# FIG. 2

FIG. 5

EP 0 169 032 B1

# FIG. 6

4